Europäisches Patentamt

European Patent Office

Office européen des brevets

(19)

(11) Publication number : **0 346 142 B1**

(12) # EUROPEAN PATENT SPECIFICATION

(45) Date of publication of patent specification :
09.09.92 Bulletin 92/37

(51) Int. Cl.⁵ : **E01C 3/00, E01C 3/02**

(21) Application number : **89305847.9**

(22) Date of filing : **09.06.89**

(54) **Process and composition for constructing hydraulically bonded road foundations or semirigid roadway structures.**

(30) Priority : **10.06.88 HU 301788**

(43) Date of publication of application :
**13.12.89 Bulletin 89/50**

(45) Publication of the grant of the patent :
**09.09.92 Bulletin 92/37**

(84) Designated Contracting States :
**AT BE CH DE ES FR GB GR IT LI LU NL SE**

(56) References cited :
**DE-A- 2 655 729**
**DE-B- 1 080 135**
**DE-C- 1 101 473**
**FR-A- 2 311 766**
**FR-A- 2 583 998**

(73) Proprietor : **Debreceni Magas, Mély és utépitö Részvénytársaság**
**Barna u. 15**
**H-4025 Debrecen (HU)**

Proprietor : **PANNONPLAST Müanyagipari Részvénytársaság**
**Nagytetenyi ut 216/218**
**H-1225 Budapest XXII (HU)**

(72) Inventor : **Pallos, Imre**
**Váczi u. 40**
**H-1056 Budapest (HU)**
Inventor : **Pittlik, Elemér**
**Juhász Gy. u. 2**
**H-4029 Debrecen (HU)**
Inventor : **Szab , Erzsébet**
**Vincellér u. 2**
**H-4031 Debrecen (HU)**
Inventor : **Szima, Ernö**
**j u. 45/A**
**H-4034 Debrecen (HU)**

(74) Representative : **Hedley, Nicholas James Matthew et al**
**Stephenson Harwood One, St. Paul's Churchyard**
**London EC4M 8SH (GB)**

## Description

The object of the invention is process and composition for constructing hydraulically bonded road foundations or semirigid roadway structures. The composition according to the invention contains grained (granulated) plastic material.

Because of a high increase in the price of bitumens, the upper bituminous layers (asphalt toppings) of roadway structures have become ever thinner in the last decade. There have been inevitably developed the so called semirigid roadway structures having hydraulically bonded lower and upper base layers both of relatively great thickness, on which layers an asphalt topping of maximum l0 cm total thickness is built. The mainly transverse contraction fissures ever arising in the hydraulically bonded base layers due to the contractions and expansions caused by the temperature differences, exert a stress on the asphalt topping resulting in it cracking through sooner or later. In the practice of many countries the cracking through of the asphalt toppings built on hydraulically bonded foundations is unwillingly acknowledged so that the early closing of the cracks is considered as an inevitable maintenance activity. Namely for lack of this there is not ensured the water-tightness of the roadway structure, leading to the decrease in the load-bearing capacity of the road, by which its lifetime can be much more reduced than by the effects of the vehicles.

The specific behaviour of the semirigid roadway structures and the technical problems caused by this are outlined by innumerable technical papers and publications. Nowadays on this theme there are regularly organized symposiums (e.g. in Lisbon, June l985; in London, October l986; special section of the Roadway World Congress in Brussels, l987). The technical and economic advantages and disadvantages of building semirigid roadway structures are comprehensively outlined by three technical papers or publications as follows:

CAMOMILLA, MALGARINI: Cement mixed in highway Pavements. Dynamic real moduli in the different types on the "Autostrade" network. (Autostrade SPA, October, l984).

GRÜFELFELDE: Erfahrungen mit vollstabilisierten Oberbau im Kanton Zürich. (Strasse und Verkehr, Januar, l982).

Scellement des fissures. Recommandation sur les chaussées semi-rigides. Annexe XIII. E.C.E. TEM. l985.

Preventing the cracking through of the thinner asphalt pavement on semirigid roadway structures is a technically sophisticated task which is, in our knowledge, not unambiguously solved in Europe up to now.

The technical solutions preventing the danger of cracking through have basically two trends:

I. The transferring of the thermic fissures of the hydraulically bonded base layer (course) is prevented by building an intermediate layer with special properties, being suitable for taking the tensile stresses:

– Between the base course and the asphalt pavement so called Stress Absorbing Membranes are set. The modified bitumens with high elastomer content are suitable for forming this (membrane-like) layer which layer can be built in small thickness. This method has been used only recently and, according to the references of the technical literature is proving to be an effective technique. Its general use is made questionable by to the high cost effect of applying the modified bitumen, since in that way the advantage of building the semirigid roadway structures with lower cost is lost.

– The French firm COLAS has attempted to build a stress absorbing intermediate layer for a long time. In order to take the thermic-breathing movement of the hydraulically bonded base layer a 8 - l5 cm (!) thick bitumen-emulsive grained material, emulsive cold asphalt, is built between the base and the asphalt pavement. (LANGUMIER: Fini le temps des fissures. Revue Général des Routes et des Aérodromes, No. 6l7, l985). Based on the experiences of the firm COLAS this method is also a promising one. However, the cost effects of building an intermediate layer of considerable thickness and the possible risk that in case of more significant traffic loadings, due to the lower stability of the emulsive intermediate layers, detrimental deformations can arise in the asphalt surfacing that are disadvantageous.

2. Processes disrupting the continuity of the hydraulically bonded base during the construction:

The most obvious and economical solution trends are aimed at preventing the formation of wider fissures in the hydraulically bonded base course from the beginning. For that reason the continuity of the base is disrupted during the construction thus inhibiting the formation of transverse fissures of considerable width in greater distances, but promoting the formation of such fissures at short intervals and with small width. Such hair-cracked asphalt surfacing coworking with the hydraulic base already does not have such a deformability in the winter weather that could cause its cracking through or if after all the cracking through is caused it is formed only in a reduced degree. Several variations of the technique aiming at this are known from the practice of some greater foreign road building companies as follows:

– When building the hydraulic base so called blind gaps are formed at short intervals (of 3-5 m).

– The whole thickness of the hydraulic base course is formed by constructing several thinner layers.

– When building at laying, corrugated sheets made from plastic material are laid in a plane corresponding to the thicknesses l/3 or l/2.

– When mixing the material of the hydraulically bonded base course a bonding inhibitor agent is added, then the layer laid is rolled for a long time by very heavy paving rollers in order to "break" the material and to obtain a great number of haircracks.

The success of the above techniques can be estimated with difficulty. However, it is thought-provoking that, in our knowledge, there are no foreign technical prescriptions of state validity which would make obligatory the application of anyone of the techniques described above.

In order to avoid the formation of reflection cracks different methods have been developed as can also be seen from the technical literature sources mentioned already above:

– the limits of the maximum strength of the layer have been determined,

– the layer was broken by paving roller already during bonding,

– the asphalt was not stuck to the base course,

– only diluted bitumen was used, to reach the parameters required,

– so called stress absorbing membrane was built in as intermediate layer with high cost,

– the material continuity was disrupted by setting corrugated sheets from plastic material, etc.

The time of the appearance of the cracks was delayed by these methods, however, the later occurring cracks indicate that the problem is not solved yet.

The object of the invention is to change the internal structure of the hydraulically bonded road foundations in such away that the damaging effect of the continually working stresses of the hydraulic road foundations on the coworking asphalt surfacing should be prevented without reducing the load bearing capacity of the whole roadway structure.

We have realized that by adding suitable grained (granular) plastic material as additive into the hydraulically bonded road foundations, the plastic material particles weaken and distribute the arising tensile strength while the compressive strength of the road foundation remains practically unchanged. Due to the knocking against one another and deviation of the arising stresses in the hydraulically bonded base course prepared using grained plastic material additive the material functions like the traditional metal foundation and the asphalt does not crack through above it. (The panel-like cracking of concrete is followed by the cracking through of the asphalt.)

According to the invention, in compliance with those stated above, for preparing hydraulically bonded road foundations grained plastic material additive is used, wherein the plastic material particles are positioned in the road foundation as solid elements. Using this technique it is more advantageous to apply plastic material with smaller specific surface, i.e. larger grains within the range of 0,2-6,0 $m^2/kg$ of the specific surface. The cement mortar does not adhere to the grains of the plastic material having a specific surface of 0.2 - 6.0 $m^2/kg$ and is not bonded with them, thus due to the loading affecting on the structure and to the effects of temperature there is produced a network of haircracked system conforming to the position of the grains of plastic material. This form of fissuration comes into existence due to the arising stresses colliding with one another and changing their direction. Due to the haircracks a flexible roadway structure layer, similar to the metal foundation, is formed by the road foundation completed under the asphalt layer set on it, thus in this way the reflection breaking of the asphalt does not occur following the breaking of the traditional concrete foundations.

According to the invention the following process is realized: grained plastic material or grained plastic material waste is mixed in the required amount to the binding materials of the hydraulically bonded road foundations, so to the cement and/or basic fly ash or lime + fly ash binding materials and to the generally used additives, e.g. to sand-gravel, crushed gravel and/or to industrial waste products (e.g. fly ash, blast furnace cinder) and this composition blended with adequate volume of water is used for building the road foundation. The quality of the hydraulic binding material, the proportion of the water to the binding material, and the quality and quantity of the additives used if desired is chosen according to the usual practice of the road building. This road foundation is set on a surface with adequate load bearing capacity, then an asphalt surfacing is built on it according to the practice usual in the road building. Thus in the way according to the invention there can be built e.g. roads, footways, playing fields, reservoirs, etc.

Alternatively, the plastic material particles are mixed to the soil of the 20 cm top part of the earthwork or to the mineral material carried in the earthwork and stretched there in situ, i.e. the plastic material particles are brought into contact with the other components only on the site of road foundation building. (This technique is, according to the road building technology, the so called in situ stabilization method.)

For the purpose of road building an amount of the plastic material of 50 - l50 $kg/m^3$ with a particle size of l-l5 mm (preferably of 5-l0 mm) and with a specific surface of 6.0 - 0.2 $m^2/kg$ is used.

According to the invention any plastic material wastes or their mixtures can be advantageously and economically utilized. The granules of the required size can be obtained by grinding or milling. For example polyolefines, so polyethylene, or polypropylene, or PVC etc. or their mixtures can be used.

The invention is illustrated by non limiting examples in details as follows:

Example I

Preliminary investigation in laboratory

Preliminary investigation was carried out in order to determine the amount of the grained plastic material to be mixed to the composition for preparing road foundations. A series of I0 kg mixtures of the above composition was prepared with adding different amounts of plastic material ranging from 50 to 200 kg/m³. With adding more than I50 kg/m³ the equal distribution of the plastic material becomes critical, in such cases a lot of plastic material nests are formed in the specimen. The addition of I35 kg/m³ plastic material to the composition consisting of the usual ingredients used for building road foundations and semirigid roadway structures has been found to be optimal.

Example 2

Specimens of different compositions have been prepared to investigate the compressive strength. The units with indices I, 2, 3 of the series A, B, C and D, respectively, were prepared without adding plastic material and those with indices 4, 5, 6 contained plastic material.

The meanings of the abbreviations applied are as follows:

$m_C$ = cement mass/m³
$m_V$ = water mass/m³
$m_a$ = mineral additive mass/m³
$m_{pe}$ = fly ash mass/m³
$m_m$ = plastic material mass/m³
$\gamma$ = total mass/m³

Composition of experimental mixtures prepared for the strength test:

Composition of specimens $A_{I \text{ to } 3}$:
$m_C$ = II0 kg/m³ (C.350)
$m_V$ = I03 l/m³
$m_a$ = 2048 kg/m³
$\gamma$ = 226I kg/m³

Composition of specimens $A_{4 \text{ to } 6}$:
$m_C$ = II0 kg/m³ (C.350)
$m_V$ = I03 l/m³
$m_a$ = I875 kg/m³
$m_m$ = I73 kg/m³
$\gamma$ = 226I kg/m³

Composition of specimen $B_{I \text{ to } 3}$:
$m_C$ = I20 kg/m³ (C.350)
$m_V$ = II3 l/m³
$m_a$ = 2038 kg/m³
$\gamma$ = 227I kg/m³

Composition of specimens $B_{4 \text{ to } 6}$:
$m_C$ = I20 kg/m³ (C.350)
$m_V$ = II3 kg/m³
$m_a$ = I876 kg/m³
$m_m$ = I63 kg/m³
$\gamma$ = 2272 kg/m³

Composition of specimens $C_{I \text{ to } 3}$:
$m_C$ = 90 kg/m³ (C.350)
$m_V$ = 85 l/m³
$m_a$ = 2068 kg/m³
$m_{pe}$ = 207 kg/m³
$\gamma$ = 2360 kg/m³

Composition of specimens $C_{4 \text{ to } 6}$:

$m_C$ = 90 kg/m³ (C.350)
$m_V$ = 85 l/m³
$m_a$ = l946 kg/m³
$m_p$ = 207 kg/m³
$m_m$ = l22 kg/m³
$\gamma$ = 2360 kg/m³

Composition of specimens $D_{l \text{ to } 3}$:

$m_C$ = l00 kg/m³ (C.350)
$m_V$ = 94 l/m³
$m_a$ = l852 kg/m³
$m_{pe}$ = 206 kg/m³
$\gamma$ = 2252 kg/m³

Composition of specimens $D_{4 \text{ to } 6}$:

$m_C$ = l00 kg/m³ (C.350)
$m_V$ = 94 l/m³
$m_a$ = l7l7 kg/m³
$m_{pe}$ = 206 kg/m³
$m_m$ = l35 kg/m³
$\gamma$ = 2252 kg/m³

The compressive strength of the specimens of the composition above (3 parallel samples for each composition) was examined by the Hungarian standard method MSZ 07-3703 on the 2l-st day. The results obtained are shown in Table I.

## Table I

| Plastic material content of the specimens kg/m³ | | Compressive strength of the specimens $(N/mm^2)$ | | | Average compressive strength $(N/mm^2)$ |
|---|---|---|---|---|---|
| $A_{1 \text{ to } 3}$ | - | 0.89, | 0.64, | 1.35 | 0.96 |
| $A_{4 \text{ to } 6}$ | 173 kg/m³ | 1.10, | 1.18, | 0.71 | 1.00 |
| $B_{1 \text{ to } 3}$ | - | 1.80, | 1.77, | 2.33 | 1.97 |
| $B_{4 \text{ to } 6}$ | 163 kg/m³ | 1.14, | 1.37, | 1.67 | 1.39 |
| $C_{1 \text{ to } 3}$ | - | 1.03, | 1.64, | 1.21 | 1.29 |
| $C_{4 \text{ to } 6}$ | 122 kg/m³ | 1.75, | 2.56, | 1.50 | 1.94 |
| $D_{1 \text{ to } 3}$ | - | 3.00, | 2.18, | 3.74 | 2.97 |
| $D_{4 \text{ to } 6}$ | 135 kg/m³ | 2.02, | 2.52, | 2.65 | 2.40 |

Based on the preliminary laboratory experiments to the following findings can be made:

For the mixture "A" the addition of l73 kg/m³ plastic material does not practically change the value of the compressive strength.

For the mixtures "B" and "D", respectively, some decrease, however, for the mixture "C" an increase of the value of compressive strength can be experienced.

Consequently there is no unambiguous relationship between the plastic material additive added to the mixture in a well distributable amount and the development of compressive strength values, and it can be established that the values of the compressive strength do not decisively deteriorate under the influence of adding plastic material.

Following the preliminary experiments mentioned above we have recommended for bulk production or establishing experimental road stages a mixture containing l35 kg/m³ plastic material additive and having a somewhat higher cement content (l40 kg/m³ with the exact composition as follows:

$m_c$ = l40 kg/m³ (C.350)
$m_v$ = 94 l/m³
$m_a$ = l677 kg/m³
$m_{pe}$ = 206 kg/m³
$m_m$ = l35 kg/m³
$\gamma$ = 2252 kg/m³

The compressive strength values of this composition are the following (obtained from the average of three samples): 7 days old sample: 3.l2 N/mm², l4 days old one:³ .70 N/mm², 2l days old one: 3.36 N/mm².

These compressive strength values significantly exceed the related compressive strength requirements. Based on the above facts the approval of the Ministry of Transport and Communication and that of the builder has been obtained for establishing and constructing the experimental stages.

## Example 3

### Experimental stage of a new state-controlled main cross-road under construction

Main cross-road was built between the villages Komádi and Ujiráz in its planned 250-2+450 section on 25-th, 26-th and 28-th August, l987. The material was mixed in the mixing plant at Mezöpeterd. 40 t refuse granulated and ground plastic material (refuse material of the factory of HMV, Debrecen, Hungary) was utilized.

The compactness in the lower layer as determined by surface probe (the compactness measured according to the Hungarian standard MSZ l4043/7) is equal to 95 per cent, 92 per cent, 93 per cent, 95 per cent, 93 per cent, in the top layer: 92 per cent, 89 per cent, 94 per cent, 95 per cent, 89 per cent, immediately when completing the construction.

On 6-th October, l986 according to bending measurement with swinging cantilever: 0.60, 0.55, 0.65, 0.53, 0.40, 0.39 Jm, and simultaneously according to disc measurement: $E_2$ = 327 N/mm².

On l6-th October, l987 when breaking 2l days old samples: in average 7.648 N/mm² (7.l2 - 8.53) for a density of 2.095 g/cm³ (2.056 - 2.l26).

On 2l October, l987 covering with asphalte.

The results of both bending measurements effected with swinging cantilever and disc measurements performed on the experimental section constructed equally show that the load bearing capacity of the hydraulically bonded road foundation or roadway structure constructed with adding grained plastic material is excellent.

## Example 4

### Experimental section on a settlement road under construction:

in Debrecen the road with sign l of the settlement Tócosvölgye
0+000-0+l00 km approximately 700 m² area and on the service road
0+000-0+l55 km approximately on 900 m² area.

On 30-th October, l987 road with sign l, on l6-th November the service road.

Utilized: l5 tonnes of ground plastic material.

On 5-th December, l987 covered with asphalte.

The advantages of the invention are as follows:
– As a result of transforming the structure of the hydraulically bonded road foundations the life time of the roadway structure increases, thereby reducing the repair costs and traffic limitations caused by the road repairs,
– as a result of utilizing the plastic material wastes qualified as dangerous ones the environment protection problems caused by storing them can be avoided and the costs of storing can be spared,
– new valuable product is obtained from plastic waste material.

**Claims**

1. Process for preparing hydraulically bonded road foundations or semirigid roadway structures with using operations known for building road foundations or semirigid roadway structures and with applying known hydraulic binding materials and mineral additives used for producing the material of road foundations, **characterized** in adding also 50-150 kg/m$^3$ grained plastic material of 1-15 mm, preferably of 5-10 mm particle size and of 6.0-0.2 kg/m$^2$ specific surface into the material of the road foundation or into the matter of the semirigid roadway structure.

2. The process according to claim 1, **characterized** in using as hydraulic binding materials cement, basic fly ash replacing partly or completely the cement or a mixture of fly ash and lime.

3. The process according to claim 1 or 2, **characterized** in using different kinds of grained plastic materials, preferably using milled or ground plastic material waste.

4. The process according to any of claims 1 to 3, **characterized** in using milled or ground hard plastic material waste - preferably PVC waste - as plastic material.

5. Process according to any of claims 1 to 4, **characterized** in admixing the grained plastic material in situ to the originally existing soil or to the mineral material transported there and laid out for the road building.

6. Composition for preparing hydraulic road foundations or semirigid roadway structures, which composition contains known hydraulic binding materials, water and the mineral materials generally used, **characterized** in containing 50-150 kg/m$^3$ grained plastic material of 1-15 mm, preferably of 5-10 mm particle size and of a specific surface of 6.0-0.2 kg/m$^2$.

7. The composition according to claim 6, **characterized** in containing as binding materials cement, basic fly ash replacing the cement partly or completely or fly ash and lime together.

8. Composition according to claim 6 or 7, **characterized** in containing the solid components of the composition and the water separated from each other.

**Patentansprüche**

1. Verfahren zur Herstellung von hydraulisch gebundenen Strassenunterbauen oder halbstarren Strassendeckenstrukturen, wobei zum Bauen von Strassenunterbauen oder halbstarren Strassendeckenstrukturen bekannte Arbeitsvorgänge benutzt werden, und wobei bekannte hydraulische Bindematerialien und Mineralzusätze, die benutzt werden, um das Material von Strassenunterbauen herzustellen, verwandt werden, dadurch gekennzeichnet, dass auch 50-150 kg/m$^3$ granulierten Kunststoffs mit einer Teilchengrösse von 1-15 mm, vorzugsweise von 5-10 mm, und mit einer spezifischen Oberfläche von 6,0-0,2 kg/m$^2$ dem Material des Strassenunterbaus oder dem Stoff der halbstarren Strassendeckenstruktur zugesetzt wird.

2. Verfahren nach Anspruch 1, dadurch gekennzeichnet, dass als hydraulische Bindematerialien Zement, elementare Flugasche, die den Zement teilweise oder vollständig ersetzt, oder eine Mischung von Flugasche und Kalk benutzt werden.

3. Verfahren nach Anspruch 1 oder 2, gekennzeichnet durch Benutzung verschiedener beten von granuliertem Kunststoff, vorzugsweise durch Benutzung von gemahlenem oder zerkleinertem Kunststoffabfall.

4. Verfahren nach einem der Ansprüche 1 bis 3, gekennzeichnet durch Benutzung von gemahlenem oder

7

zerkleinertem harten Kunststoffabfall -vorzugsweise PVC-Abfall- als Kunststoff.

5. Verfahren nach einem der Ansprüche 1 bis 4, gekennzeichnet durch Beimischung des granulierten Kunststoffs an Ort und Stelle zu dem ursprünglich existierenden Boden oder zu dem Mineralmaterial, das dorthin transportiert und zum Strassenbau ausgelegt ist.

6. Zusammensetzung zur Herstellung von hydraulischen Strassenunterbauen oder halbstarren Strassendeckenstrukturen, wobei die Zusammensetzung bekannte hydraulische Bindematerialien, Wasser und die im allgemeinen benutzten Mineralmaterialien enthält, dadurch gekennzeichnet, dass es 50-150 kg/m³ von granuliertem Kunststoff mit einer Teilchengrösse von 1-15 mm, vorzugsweise von 5-10 mm, und mit einer spezifischen Oberfläche von 6,0-0,2 kg/m² enthält.

7. Zusammensetzung nach Anspruch 6, dadurch gekennzeichnet, dass sie als Bindematerialien Zement, elementare Flugasche, die den Zement teilweise oder vollständig ersetzt, oder Flugasche und Kalk zusammen enthält.

8. Zusammensetzung nach Anspruch 6 oder 7, dadurch gekennzeichnet, dass sie die festen Komponenten der Zusammensetzung und das Wasser voneinander getrennt enthält.

## Revendications

1 - Procédé de préparation de fondations de chaussée à liaison hydraulique ou de structures de routes semi-rigides par l'utilisation des opérations connues de construction de fondations de chaussée ou de structures de routes semi-rigides et avec application des matières hydrauliques connues de liaison et d'additifs minéraux pour former le matériau des fondations de la chaussée, caractérisé en ce qu'on ajoute également 50 à 150 kg/m³ de matière plastique granulée d'une grosseur de particules de 1 à 15 mm, de préférence de 5 à 10 mm et ayant une surface de contact de 6,0 à 0,2 kg/m², dans le matériau de la fondation de la chaussée ou dans la matière de la structure de route semi-rigide.

2 - Procédé selon la revendication 1, caractérisé en ce qu'on utilise comme matières hydrauliques liantes un ciment, une soude carbonatée basique qui remplace le ciment en totalité ou en partie ou un mélange de soude carbonatée et de chaux.

3 - Procédé selon la revendication 1 ou 2, caractérisé en ce qu'on utilise des types différents de matières plastiques granulées, en utilisant de préférence des déchets broyés ou concassés de matière plastique.

4 - Procédé selon l'une quelconque des revendications 1 à 3, caractérisé en ce qu'on utilise des déchets d'une matière plastique dure broyée ou concassée, de préférence des déchets de PVC, à titre de matière plastique.

5 - Procédé selon l'une quelconque des revendications 1 à 4, caractérisé en ce qu'on mélange la matière plastique granulée in situ avec le sol initial ou avec une matière minérale transportée à cet endroit et déposée pour la construction de la chaussée.

6 - Composition de préparation de fondations hydrauliques d'une chaussée ou de structures de routes semi-rigides, composition qui contient des matières hydrauliques liantes connues, de l'eau et des matières minérales habituellement employées, caractérisée en ce qu'elle contient de 50 à 150 kg/m³ de matière plastique granulée d'une granulométrie de 1 à 15 mm, de préférence de 5 à 10 mm et ayant une surface de contact de 6,0 à 0,2 kg/m².

7 - Composition selon la revendication 6, caractérisée en ce qu'elle contient à titre de matières liantes, du ciment, de la soude carbonatée basique remplaçant partiellement ou complètement le ciment ou un mélange de soude carbonatée ou de chaux.

8 - Composition selon la revendication 6 ou 7, caractérisée en ce qu'elle contient les composants solides de la composition et l'eau séparés les uns de l'autre.